# FASCICULE DE BREVET EUROPEEN

(11) **EP 3 570 353 B1**
(45) Date de publication et mention de la délivrance du brevet: **06.11.2024**
(21) Numéro de dépôt: 19174431.7
(22) Date de dépôt: 14.05.2019
(51) Int. Cl.: H01M 4/86, H01M 4/90, H01M 4/92

(54) **COUCHES CATALYTIQUES COMPRENANT UN FULLERENE**
KATALYTISCHE SCHICHTEN, DIE EIN FULLEREN UMFASSEN
CATALYTIC LAYERS COMPRISING A FULLERENE

(30) Priorité: 14.05.2018 FR 1854007
(43) Date de publication de la demande: 20.11.2019
(73) Titulaire: Commissariat à l'Energie Atomique et aux Energies Alternatives, 75015 Paris (FR)
(72) Inventeur: ARTERO, Vincent, 38950 QUAIX-EN-CHARTREUSE (FR); COUTARD, Nathan, 38000 GRENOBLE (FR); CHENEVIER, Pascale, 38700 LA TRONCHE (FR)
(74) Mandataire: Plasseraud IP

(56) Documents cités:
- EP-A1- 1 255 314
- WO-A1-2011/073723
- WO-A1-2015/083571
- WO-A2-2008/012634
- JP-A- 2009 117 087
- JP-A- 2014 192 098
- JP-B2- 5 294 550
- OMIDVAR AKBAR ED - PARK YUNG WOO: "Dissociation of O2molecule on Fe/Nxclusters embedded in C60fullerene, carbon nanotube and graphene", SYNTHETIC METALS, vol. 234, 5 November 2017 (2017-11-05), pages 38 - 46, XP085249979, ISSN: 0379-6779, DOI: 10.1016/J.SYNTHMET.2017.10.010
- CORO JULIETA ET AL: "Fullerene applications in fuel cells: A review", INTERNATIONAL JOURNAL OF HYDROGEN ENERGY, ELSEVIER SCIENCE PUBLISHERS B.V., BARKING, GB, vol. 41, no. 40, 30 August 2016 (2016-08-30), pages 17944 - 17959, XP029732860, ISSN: 0360-3199, DOI: 10.1016/J.IJHYDENE.2016.08.043

## Description

L'invention concerne l'utilisation de fullerène pour améliorer la diffusion gazeuse dans des couches catalytiques d'électrode de pile à combustibles.

Les piles à combustible sont des dispositifs électrochimiques permettant l'oxydation contrôlée d'un carburant par réduction d'un comburant pour la production d'électricité. Pour contrôler la réaction à tout instant, le carburant est oxydé sur une électrode dite anode, séparée d'une autre électrode dite cathode à laquelle le comburant est réduit. Les deux électrodes sont séparées de façon à ce que carburant et comburant ne puissent entrer en contact direct.

Dans de nombreuses piles à combustible, un au moins des substrats, c'est-à-dire le carburant ou le comburant, est un gaz. Les sous-produits des réactions qui ont lieu à l'anode et à la cathode peuvent être gazeux, liquides ou ioniques. Généralement, les anode et cathode respectivement sont constituées d'un support perméable au substrat ainsi qu'aux sous-produits des réactions et comportant à sa surface un catalyseur d'oxydation et/ou de réduction afin de faciliter cinétiquement les réactions. Ces catalyseurs permettent d'oxyder de façon contrôlée des carburants à température proche de la température ambiante.

Les piles à combustibles les plus répandues utilisent de l'hydrogène (H₂) et de l'oxygène (O₂), notamment sous forme d'air, comme carburant et comburant respectivement. Dans ce type de pile à combustible, l'hydrogène est oxydé à l'anode et en même temps l'oxygène est réduit à la cathode donnant ainsi lieu au cycle vertueux H₂ + ½O₂ = H₂O permettant de produire de l'énergie électrique et thermique sans relâcher de CO₂. D'autres piles à combustible, utilisent du méthanol, de l'hydrazine ou du gaz naturel comme carburant.

L'un des défis des piles à combustible est l'approvisionnement des catalyseurs en substrats. Les substrats diffusent à travers l'électrode jusqu'au catalyseur. Pour assurer une quantité suffisante de réactions, le catalyseur est généralement réparti dans une couche catalytique d'épaisseur non négligeable, typiquement de quelques microns, en regard des phénomènes de diffusion. Cet effet de diffusion peut être pénalisant à température ambiante, lorsque les mouvements moléculaires sont lents. De plus, les réactions de nombreuses piles à combustible produisent de l'eau qui est liquide à température ambiante et peut gêner la diffusion des substrats et des sous-produits, en particulier des gaz hydrophobes. C'est notamment le cas des piles à combustibles utilisant de l'hydrogène et de l'oxygène.

Les matériaux des couches catalytiques doivent donc être perméables aux substrats, en particulier aux gaz. Ils doivent aussi conduire l'électricité produite par les réactions d'oxydation et de réduction. Ils doivent permettre l'évacuation des sous-produits souvent ioniques. Enfin ils doivent maintenir les catalyseurs à leur place, stables et intègres.

Dans le cadre de l'utilisation par exemple de l'hydrogène comme vecteur d'énergie propre car participant du cycle vertueux H₂ + ½O₂ = H₂O ne relâchant pas de CO₂, il est important de trouver des catalyseurs peu chers et non polluants. L'état de l'art de la plupart des piles à combustibles utilise le platine, un métal rare et cher. Une diminution drastique des quantités de platine ou bien l'utilisation de catalyseurs alternatifs basés sur des métaux non nobles est nécessaire pour un déploiement commercial global viable. Le problème technique de la diffusion de substrat vers les sites catalytiques est d'autant plus prépondérant pour de tels matériaux alternatifs ou à faible quantité de platine. La demande de brevet EP 2180539 A1 décrit par exemple des matériaux catalytiques alternatifs comprenant un complexe organométallique greffé sur un support d'électrode via un espaceur.

D'autres solutions ont été proposées pour tenter de résoudre le problème de la diffusion des gaz. Wang W. L. et al. décrivent l'élaboration de couches catalytiques carbonées plus poreuses afin de contenir plus de voies de passages pour les gaz (Micro-porous layer with composite carbon black for PEM fuel cells, Electrochimica Acta 2006, 51(23), 4909-4915). Cependant, cela résulte en des structures moins durables et plus susceptibles aux effondrements structurels. Shao Y. et al. ont proposé l'augmentation de la température de fonctionnement afin de rendre plus rapide la diffusion moléculaire des substrats (Proton exchange membrane fuel cell from low température to high température: Material challenges, Journal of Power Sources 2007, 167(2), 235-242). Les désavantages les plus notoires sont l'usure prématurée des matériaux, en particulier les membranes souvent utilisées dans les piles à combustible, donc des surcoûts à l'utilisation. De plus, cela entraîne des délais de mise en opération. Enfin, pour les piles à basses activités, la nécessité d'un chauffage externe représente un surcoût et une baisse du rendement énergétique. L'augmentation de la pression des gaz substrats a par exemple été décrite par Kelly, N. A. et al (Génération of high pressure hydrogen for fuel cell electric vehicles using photovoltaic-powered water electrolysis, International Journal of Hydrogen Energy, 2011, 36(24), 15803-15825). Cela ajoute aux dangers inhérents à la mise en présence d'un carburant et d'un comburant ceux des gaz sous pressions. Les coûts de mise en oeuvre sont augmentés par la nécessité de matériaux résistants à la pression et la dégradation prématurée de la membrane soumise à des pressions intenses. De plus, le stockage de l'hydrogène sous forme d'hydrures ou adsorbé sur des matériaux poreux est préféré à son stockage sous pression pour des raisons économiques et sécuritaires. Une autre proposition consiste à l'élaboration de couches catalytiques plus fines afin de réduire la distance à parcourir pour les substrats. Cela entraîne l'augmentation de la surface nécessaire pour obtenir un courant donné, rendant les dispositifs plus encombrants et coûteux (Wilson, M. S. et al., Thin-film catalyst layers for polymer electrolyte fuel cell électrodes, Journal of Applied Electrochemistry 1992, 22 (1), 1-7). Enfin, la demande de brevet CN105720274 décrit l'ajout d'une huile hydrophobe afin d'empêcher la nucléation de la vapeur d'eau en gouttelettes dans les pores de la couche de diffusion gazeuse. Les gaz diffusent mieux dans une huile hydrophobe que dans l'eau. Cependant, la présence d'une huile hydrophobe peut mener à des problèmes d'évacuation de l'eau (Anderson R. et al., A critical review of two-phase flow in gas flow channels of proton exchange membrane fuel cells, Journal of Power Sources, 2010, 195(15), 4531-4553). De plus, ce traitement nécessite plusieurs étapes supplémentaires, comme la filtration de l'huile à travers la couche active, le nettoyage de l'excès d'huile et le séchage à haute température, qui le rendent peu pratique pour des applications industrielles. Les gouttes d'huile sont susceptibles de ne pas être stables et de s'agglomérer en gouttes plus grosses, bouchant les pores ou quittant la couche catalytique. Par ailleurs, ces huiles légères sont connues pour être très volatiles et peu adaptées à des applications haute température.

Toutes ces solutions présentent des problèmes intrinsèques qui rendent leur implémentation coûteuse, inefficace et/ou parfois dangereuse. Aussi, il existe toujours un besoin insatisfait de disposer d'un moyen d'améliorer la diffusion de substrat gazeux vers les sites catalytiques, notamment dans le cadre de l'utilisation de matériaux catalytiques alternatifs ou à faible quantité de platine.

Un but de l'invention est donc de proposer une solution simple et efficace permettant d'améliorer la diffusion de substrat gazeux vers les sites catalytiques des électrodes d'une pile à combustible.

Il est du mérite des inventeurs d'avoir découvert, de manière très inattendue et après de nombreuses recherches, que l'ajout de fullerène à la couche catalytique se trouvant à la surface de l'anode et/ou de la cathode permettait d'améliorer la diffusion de substrat gazeux vers les sites catalytiques.

Ainsi, un premier objet de l'invention est l'utilisation d'un fullerène ou d'un dérivé de fullerène comme additif de couche catalytique d'électrode, notamment de pile à combustible, pour améliorer la diffusion d'un substrat gazeux, ladite couche catalytique comprenant un catalyseur comprenant un métal non noble et un support poreux conducteur et ayant une teneur en fullerène de 0,5 à 60% en poids sec par rapport au poids sec total de la couche catalytique.

On entend par fullerène au sens de la présente invention, une molécule qui est entièrement composée de carbone, sous forme d'une sphère creuse. Les fullerènes sont constitués d'un réseau de cycles hexagonaux et pentagonaux ou même heptagonaux. Tous types de fullerènes peuvent être utilisés dans le cadre de l'invention, en particulier les fullerènes C₆₀, C₇₀, C₇₆, C₈₄. On distingue des fullerènes en tant que tel qui sont utilisés dans le cadre de l'invention les dérivés de fullerène et les composites, en particulier les nanocomposites, de fullerène. Des exemples non limitatifs de dérivés comprennent les dérivés de type PCBM : [6,6]-phényl-C₆₁-butanoate de méthyle, le [6,6]-phényl-C₇₁-butanoate de méthyle, [6,6]-phényl-C₇₇-butanoate de méthyle, [6,6]-phényl-C₈₅-butanoate de méthyle, les dérivés de type PCB-Cn à chaîne alkyle de n carbones de ces fullerènes (où la chaîne méthyle du PCBM est remplacée par une chaîne alkyle avec n compris entre 2 et 30, de préférence entre 2 et 12, plus préférentiellement encore entre 2 et 6) ; les dérivés de type PCBM bis-adduits de ces fullerènes et les dérivés de type ICBA indène-C₆₀-bis-adduit. Les dérivés de fullerène comprennent également les polymères contenant des adduits fullerènes (Poly-fullerène ou polymères avec fonctions fullerènes), des fullerènes comportant des groupes polaires dissociant de l'hydrogène comme des groupes OH ou SO₃H ainsi que les métallofullerènes. Les composites de fullerènes comprennent notamment des fullerènes à la surfaces desquels des atomes de métal ont été déposés.

L'utilisation de fullerènes dans les piles à combustibles a déjà été proposée mais jamais comme additif dans le matériau catalytique. La demande de brevet WO 2007/101051 décrit des membranes de pile à méthanol comprenant du fullerène pour entraver la diffusion de méthanol. De plus, la demande de brevet US 2011/0300063 et le brevet US 6,113,673 décrivent respectivement l'utilisation de fullerène et de nanostructure de fullerène comme moyen de de stockage d'hydrogène (H₂). Le document WO 2011//073723 quant à lui décrit l'utilisation de métallofullerènes et de nanocomposites de fullerènes dans lesquels du platine a été déposé sur des fullerènes dans des couches actives d'électrodes de pile à combustible et les documents WO 2008/012634, EP 1255314 et JP 5294550 décrivent des assemblages d'électrode à membrane pour pile à combustible comprenant des dérivés de fullerènes comportant des groupes polaires dissociant de l'hydrogène, tels que des groupes OH et SO₃H. Le document JP 2009117087 décrit des couches catalytiques comprenant un fullerène et du Pt sur support de carbone (Pt/C). Le document WO 2015/083571 A1 décrit l'utilisation de fullerène comme additif de couche catalytique d'électrode de pile à combustible, ladite couche catalytique comprenant un catalyseur comprenant un métal non noble.

Un deuxième objet de l'invention est une couche catalytique d'électrode de pile à combustible comprenant un matériau catalytique, un additif conducteur de gaz et un support poreux conducteur, l'additif conducteur de gaz étant un fullerène.

La couche catalytique selon l'invention présente une teneur en fullerène de de 0,5 à 60%, de préférence de 1 à 20 %, plus préférentiellement de 3 à 15 %, par exemple d'environ 10% en poids sec par rapport au poids sec total de la couche catalytique.

Le matériau catalytique est un catalyseur comprenant un métal non noble tel qu'un métal de transition comme par exemple le nickel, le tungstène, le molybdène le cobalt, le fer, le manganèse ou le cuivre, de préférence le nickel, le tungstène ou le cobalt. Des exemples de catalyseurs comprenant un métal non noble sont les catalyseurs bio-inspirés [Ni(P₂^{R}N₂^{R}')ₙ]^{m+} où P₂^{R}N₂^{R}' est un ligand de type 1,5-diaza-3,7-diphosphacyclooctane fonctionnalisé (DuBois, D. L., Development of molecular electrocatalysts for energy storage, Inorganic Chemistry, 2014, 53, 3935-3960), par exemple [Ni(P₂^{Cy}N₂^{Arginine})ₙ]⁷⁺ (NiCyArg), les carbures de tungstène (WC) ou de molybdène (MoC) et leurs dérivés comme CoWC et MoWC (Izhar et al. Characterization and performances of cobalt-tungsten and molybdenum-tungsten carbides as anode catalyst for PEFC. Electrochim. Acta 2009, 54, 1255-1262; Nikolic et al. On the tungsten carbide synthesis for PEM fuel cell application - Problems, challenges and advantages. Int. J. Hydrogen Energy 2014 39, 11175-11185) et MTNC où MT est un métal de transition, tel que Fe, Co, Cu, par exemple CoNC et NC indique un composé carboné nanostructuré et dopé à l'azote (Shao, M., et al., Recent advances in electrocatalysts for oxygen réduction reaction, Chemical Reviews, 2016, 116, 3594-3657).

La couche catalytique selon l'invention présente avantageusement une teneur en matériau catalytique de 0,0001 à 99,5%, de préférence de 0,001 à 80%, plus préférentiellement de 0,05 à 60 % en poids sec par rapport au poids sec total de la couche catalytique. Selon la structure et la conductivité électrique du matériau catalytique, il peut être nécessaire d'ajouter un support poreux conducteur dans la couche catalytique pour la rendre poreuse et conductrice de l'électricité. Ainsi on, entend par support poreux conducteur un matériau poreux conducteur de l'électricité. Par exemple, le platine est généralement utilisé avec un support poreux conducteur, tel que le noir de carbone. Un autre exemple est le matériau catalytique CoNC qui possède lui-même une structure poreuse et conductrice, et qui est généralement utilisé sans ajout de support poreux conducteur.

Les couches catalytiques utilisent un matériau catalytique avec ajout d'un support poreux conducteur. La teneur de la couche catalytique en matériau catalytique est avantageusement de 0,0001 à 50%, de préférence de 0,001 à 40 %, plus préférentiellement de 0,05 à 30 % en poids sec par rapport au poids sec total de la couche catalytique.

La teneur de la couche catalytique en fullerène est de 0,5 à 60%, de préférence de 1 à 20 %, plus préférentiellement de 3 à 15 %, par exemple d'environ 10% en poids sec par rapport au poids sec total de la couche catalytique.

Le support poreux conducteur peut être choisi parmi tous types de matériaux inertes chimiquement, poreux et conducteurs de l'électricité connus de l'homme du métier, en particulier il pourra être avantageusement choisi parmi les allotropes du carbone, notamment les nanotubes de carbone, les nanofibres de carbone, le noir de carbone, les carbones mésoporeux et poreux structurés (Bruno M. et al., Carbon Materials for Fuel Cells, 2014, p. 231-270) ; les oxydes métalliques conducteurs, tels que le dioxyde d'étain, le dioxyde de titane, ou le carbure de tungstène, de préférence sous forme de poudre. De préférence, le support poreux conducteur est choisi parmi les nanotubes de carbone et le noir de carbone.

La teneur de la couche catalytique en support poreux conducteur peut être de 0 à 99,5 %, de préférence 10 à 90 %, plus préférentiellement de 20 à 80 %, par exemple d'environ 50 % en poids sec par rapport au poids sec total de la couche catalytique. Dans le cas des couches catalytiques utilisant un matériau catalytique sans ajout d'un support poreux conducteur, la teneur en support poreux conducteur est de 0 % en poids sec par rapport au poids sec total de la couche catalytique. Dans le cas des couches catalytiques utilisant un matériau catalytique avec ajout d'un support poreux conducteur, la teneur en support poreux conducteur est avantageusement de 0,5 à 99,5 %, de préférence de 10 à 90 %, plus préférentiellement de 20 à 80 %, par exemple d'environ 40 à 60 % en poids sec par rapport au poids sec total de la couche catalytique.

La couche catalytique peut comprendre outre le fullerène et le matériau catalytique et des matériaux de support poreux et conducteurs éventuellement présents d'autres composants, tels qu'un ou plusieurs ionomères. A titre d'exemple d'ionomères pouvant être utilisés, on peut citer le Nafion, un copolymère fluoropolymère à base de tétrafluoroéthylène sulfoné, ou des ionomères de type polyacide sulfonique.

La couche catalytique de l'invention peut être déposée à la surface d'une électrode, notamment de pile à combustible, par tout moyen connu de l'homme du métier, tel que par exemple par filtration, enduction ou pulvérisation. Ces méthodes mettent généralement en oeuvre des encres catalytiques qui donnent lieu, après dépôt sur la surface du matériau d'électrode, à la formation de la couche catalytique. Ces encres catalytiques comprennent typiquement, outre l'additif conducteur de gaz selon l'invention et le matériau catalytique, éventuellement un matériau support poreux conducteur, et éventuellement un ionomère. L'utilisation d'un fullerène comme additif conducteur de gaz présente le grand avantage qu'il peut être ajouté directement dans la composition de l'encre catalytique lors de son élaboration en amont du dépôt, présentant le fort avantage de ne pas nécessiter de modification des procédés industriels existants.

Ainsi, un troisième objet de l'invention est une encre catalytique comprenant un solvant, un matériau catalytique, un additif conducteur de gaz, éventuellement un support poreux et conducteur et éventuellement un ionomère, l'additif conducteur de gaz étant un fullerène.

Les matériau catalytique, support poreux conducteur et ionomère sont tels que définis ci-dessus en relation avec la couche catalytique selon l'invention.

Le solvant peut être choisi parmi l'ensemble des solvants connus de l'homme du métier. A titre d'exemple on peut citer alcools, de préférence aliphatiques, l'eau et leurs mélanges. Les alcools aliphatiques sont avantageusement choisis parmi les alcools aliphatiques en C1 à C6, l'éthanol étant préféré. La teneur en solvant n'est pas un paramètre critique de l'invention. L'homme du métier l'adaptera aisément en fonction de la nature et quantité des autres constituants de l'encre catalytique, notamment des matériau catalytique, support poreux conducteur et ionomère.

L'encre catalytique selon l'invention présente avantageusement une teneur en matériau catalytique de 0,0001 à 99,5%, de préférence de 0,001 à 80%, plus préférentiellement de 0,05 à 60 % en poids par rapport au poids en matière sèche de l'encre catalytique.

Dans le cas des encres catalytiques utilisant un matériau catalytique avec ajout d'un support poreux conducteur, la teneur de l'encre catalytique en matériau catalytique est avantageusement de 0,0001 à 50%, de préférence de 0,001 à 40 %, plus préférentiellement de 0,05 à 30 % en poids par rapport au poids total sec de l'encre catalytique.

Dans le cas des encres catalytiques utilisant un matériau catalytique sans ajout d'un support poreux conducteur, la teneur de l'encre catalytique en matériau catalytique est avantageusement de 5 à 99,5%, de préférence de 10 à 80 %, plus préférentiellement de 20 à 60 % en poids par rapport au poids total sec de l'encre catalytique.

La teneur de l'encre catalytique en fullerène est de 0,5 à 60%, de préférence de 1 à 20 %, plus préférentiellement de 3 à 15 %, par exemple d'environ 10% en poids par rapport au poids total sec de l'encre catalytique. Comme décrit ci-dessus, le support poreux conducteur peut être choisi parmi les allotropes du carbone, notamment les nanotubes de carbone, les nanofibres de carbone, le noir de carbone, les carbones mésoporeux et poreux structurés ; les oxydes métalliques conducteurs, tels que le dioxyde d'étain, le dioxyde de titane ; et le carbure de tungstène, notamment sous forme de poudre.

La teneur de l'encre catalytique en support poreux conducteur peut être de 0 à 99,5 %, de préférence 10 à 90 %, plus préférentiellement de 20 à 80 %, par exemple d'environ 50 % en poids sec par rapport au poids sec total de l'encre catalytique. Dans le cas des encres catalytiques utilisant un matériau catalytique sans ajout d'un support poreux conducteur, la teneur en support poreux conducteur est de 0 % en poids sec par rapport au poids sec total de l'encre catalytique. Dans le cas des encres catalytiques utilisant un matériau catalytique avec ajout d'un support poreux conducteur, la teneur en support poreux conducteur est avantageusement de 0,5 à 99,5 %, de préférence de 10 à 90 %, plus préférentiellement de 20 à 80 %, par exemple d'environ 40 à 60 % en poids sec par rapport au poids sec total de l'encre catalytique.

L'encre catalytique peut comprendre outre le fullerène, le matériau catalytique et éventuellement le support poreux conducteur les mêmes composants que la couche catalytique selon l'invention.

Un quatrième objet de l'invention est une électrode, notamment de pile à combustible, comprenant une couche de diffusion gazeuse et une couche catalytique sur au moins une partie de la surface de la couche de diffusion gazeuse. De préférence, la couche catalytique recouvre l'intégralité de la surface de la couche de diffusion gazeuse. La couche catalytique selon l'invention comprend un matériau catalytique et un additif conducteur de gaz, caractérisé en ce que l'additif conducteur de gaz est un fullerène. Les matériaux catalytiques et support poreux conducteurs appropriés, le fullerène ainsi que les composants additionnels (ionomères, etc.) et leurs quantités sont ceux décrits ci-dessus.

Des exemples non limitatifs de réalisation de l'invention sont décrits ci-après.

### FIGURES

**Figure 1** **:** Voltampérométrie cyclique pour la couche catalytique de l'exemple A ;
**Figure 2** **:** Voltampérométrie cyclique pour la couche catalytique de l'exemple B ;
**Figure 3** **:** Voltampérométrie cyclique pour la couche catalytique de l'exemple C ;
**Figure 4** **:** Voltampérométrie cyclique pour la couche catalytique de l'exemple D ;
**Figure 5** **:** Voltampérométrie cyclique pour la couche catalytique de l'exemple E ;
**Figure 6** **:** Voltampérométrie cyclique pour la couche catalytique de l'exemple F ;
**Figure 7** **:** Voltampérométrie cyclique pour la couche catalytique de l'exemple G ;
**Figure 8** **:** Voltampérométrie cyclique pour la couche catalytique de l'exemple H ;
**Figure 9** **:** Voltampérométrie cyclique pour la couche catalytique de l'exemple I.

### EXEMPLES

### Abréviations

AME : assemblage membrane-électrode ;
CNT : nanotubes de Carbone (anglais : Carbon NanoTubes) ;
EtOH : éthanol ;
GDL : couche de diffusion des gaz (anglais : Gas Diffusion Layer) ;
HEPES : acide 4-(2-hydroxyéthyl)-1-piperazineéthanesulfonique ;
MES : acide 2-(N-morpholino)éthanesulfonique ;
NHE : électrode normale à hydrogène (anglais : Normal Hydrogen Electrode) ;
PAC : pile à combustible ;
Pt/C : platine sur carbone.

### Exemple 1 : Préparation d'électrodes

Sept anodes et deux cathodes comportant des couches catalytiques selon l'invention ont été préparées.

### Elaboration des anodes :

### Préparation des matériaux carbonés :

Exemples A, B et G : Des nanotubes multi paroi (Nanocyl, NC7000 ultra pure, CNT) modifiés pour porter des fonctions acide naphtoïque (CNT-COOH) (Lalaoui N. et al., Chem. Commun. 2015, 51 (35), 7447-7450) ont été dispersés à 3mg/mL dans EtOH abs.

Exemples C et D : Des CNT (Nanocyl, NC7000 ultra pure) ont été dispersés à 3mg/mL dans EtOH absolu.

Exemples B, D, F et G : un ionomère (Nafion 117 à 5% en solution dans des alcools aliphatiques) a été ajouté aux suspensions afin d'atteindre un ratio m(Nafion)/m(CNT) = 1 et le mélange est soniqué pendant 3 heures.

Le fullerène C₆₀ est ajouté, si besoin, en même temps que les matériaux carbonés, à 12% en poids sec par rapport au poids sec de matériau support poreux conducteur pour les exemples A à I.

### Ajout du catalyseur :

Exemples A, B et G : ces suspensions sont mélangées en proportions volumiques 3 : 1 à une solution de [Ni(P₂^{Cy}N₂^{Arginine})₂] (BF4)₂ (Dutta A. et al., Angewandte Chemie International Edition 2014, 53 (25), 6487-6491) à 6 mg/mL dans un tampon aqueux (MES : HEPES, 1 : 1, 0.01 mM, pH 6.0). Le mélange obtenu est déposé par enduction sur une couche de diffusion gazeuse (en anglais : gas diffusion layer (GDL), Paxitech, feutre carbone sans couche microporeuse) et séché à l'air pour obtenir les anodes bio-inspirées.

Exemples E et F : du Pt/C (46% en poids Pt, Tanaka Co.) est mélangé soit à des CNT (Nanocyl, NC7000 ultra pure) soit à du noir de carbone (Vulcan XC72, Toray) pour obtenir une charge à 10% en poids de Pt. Ce mélange est dispersé par sonication à 3 mg/mL dans EtOH abs. en présence ou non de Nafion (*vide supra*), puis déposé par enduction sur une GDL (Paxitech, feutre carbone sans couche microporeuse) afin d'obtenir 2 à 3 µgPt/cm².

Les encres ainsi obtenues sont déposées par enduction sur une GDL (Paxitech, feutre carbone sans couche microporeuse) et séchées à l'air.

### Elaboration des cathodes :

Cathode platine (exemple H) : du Pt/C (46% en poids Pt, Tanaka Co.) a été mélangé soit à des CNT (Nanocyl, NC7000, ultra pure) pour obtenir une charge à 10% en poids de Pt. Ce mélange a été dispersé par sonication à 3 mg/mL dans de l'éthanol absolue en présence de Nafion (m(Nafion)/m(carbone) = 0.64), puis déposé par enduction sur une GDL (Paxitech, feutre carbone sans couche microporeuse) afin d'obtenir 2 à 3 µgPt/cm².

Cathode Co-N-C (exemples G et I) : 20 mg de CoNC (Tran, P. D. et al., Chem. Sci. 2015, 6 (3), 2050-2053) ont été dispersés dans 1.04 mL d'un mélange EtOH : H₂O (3 : 1) en présence de Nafion (m(Nafion)/m(CoNC) = 0.64). Ce mélange a été déposé par enduction sur une GDL (Paxitech, feutre carbone sans couche microporeuse) à 1.3 mg CoNC/cm².

Le fullerène C₆₀ est ajouté, si besoin, en même temps que les matériaux carbonés, à 12% en masse par rapport au carbone pour les exemples A à I.

Le tableau 1 ci-dessous résume la composition des couches catalytique et le matériau du support de l'électrode.

| Exemple | Electrode | Couche catalytique | | Support | Ionomère |
|---|---|---|---|---|---|
| | | Catalyseur | Additif conducteur de gaz | | |
| A | Anode | NiCyArg | Fullerène C60 | CNT-COOH | N/A |
| B | Anode | NiCyArg | Fullerène C60 | CNT-COOH | Nafion |
| C* | Anode | Pt/C | Fullerène C60 | CNT | N/A |
| D* | Anode | Pt/C | Fullerène C60 | CNT | Nafion |
| E* | Anode | Pt/C | Fullerène C60 | Noir de carbone | N/A |
| F* | Anode | Pt/C | Fullerène C60 | Noir de carbone | Nafion |
| G (pile complète) | Anode | NiCyArg | Fullerène C60 | CNT-COOH | Nafion |
| | Cathode | CoNC | Aucun | Aucun | Nafion |
| H | Cathode | CoNC | Fullerène C60 | CNT | Nafion |
| I* | Cathode | Pt/C | Fullerène C60 | CNT | Nafion |

| | | | | | |
|---|---|---|---|---|---|
| * Exemple de référence | | | | | |

### Exemple 1 : Evaluation de la performance des électrodes de l'exemple 1

L'effet de l'additif dans les couches catalytique des électrodes préparées à l'exemple 1 a été évalué pour la catalyse d'oxydation de l'hydrogène en protons et électrons à l'anode d'une pile à combustible hydrogène/oxygène (PAC), ainsi que pour la catalyse de réduction de l'oxygène en eau à sa cathode. Son effet est étudié à l'anode en demi-pile (exemples A à F), à la cathode en demi-pile (exemples H et I) et à l'anode en pile complète (exemple G). Dans toutes les expériences, l'anode et la cathode sont séparées par un électrolyte. Il peut s'agir d'une membrane Nafion de 25µm d'épaisseur ou bien d'un électrolyte liquide (H₂SO₄ à 0.5M dans l'eau).

Les caractérisations électrochimiques (voltampérométrie cyclique) ont été effectuées sur un potentiostat Bio-Logic SP300 dans une cellule à 3 électrodes. En demi-pile : électrode de référence : Hg/Hg₂SO₄ (E = 0.7 V vs NHE) ; électrode auxiliaire : Pt, électrode de travail : catalyseurs décrits ci-après dans une demi pile permettant la circulation des gaz (une demi-pile appropriée est par exemple décrit dans Le Goff, A.; Artero, V.; Jousselme, B.; Tran, P. D.; Guillet, N.; Metaye, R.; Fihri, A.; Palacin, S.; Fontecave, M., From Hydrogenases to Noble Metal-Free Catalytic Nanomaterials for H-2 Production and Uptake. Science 2009, 326 (5958), 1384-1387 ; voir « Supplementary Material »). Electrolyte : H₂SO₄ à 0.5M dans H₂O (pH = 0.3)

En pile complète, les électrodes sur lesquelles ont été déposés les catalyseurs sont pressées à température ambiante autour d'une membrane Nafion de 25 µm. L'assemblage membrane-électrode (AME) obtenu est testé dans une enceinte PAC Paxitech à température et pression ambiantes.

Le tableau 2 ci-dessous résume les conditions expérimentales des différents exemples (ionomère = Nafion 117 à 5% incorporé dans l'épaisseur de l'électrode ; pour G la cathode est un matériau CoNC) :

| Exemple | Electrode | Configuration | Catalyseur | Electrolyte | Substrat catalytique (Gaz) |
|---|---|---|---|---|---|
| A | Anode | Demi-pile | NiCyArg | H₂SO₄ 0.5 M | H₂ |
| B | Anode | Demi-pile | NiCyArg | H₂SO₄ 0.5 M | H₂ |
| C* | Anode | Demi-pile | Pt/C | H₂SO₄ 0.5 M | H₂ |
| D* | Anode | Demi-pile | Pt/C | H₂SO₄ 0.5 M | H₂ |
| E* | Anode | Demi-pile | Pt/C | H₂SO₄ 0.5 M | H₂ |
| F* | Anode | Demi-pile | Pt/C | H₂SO₄ 0.5 M | H₂ |
| G | Anode | Pile complète | NiCyArg | Nafion 25µm | H₂ |
| | Cathode | Pile complète | CoNC | | O₂ |
| H | Cathode | Demi-pile | CoNC | H₂SO₄ 0.5 M | O₂ |
| I* | Cathode | Demi-pile | Pt/C | H₂SO₄ 0.5 M | O₂ |

| | | | | | |
|---|---|---|---|---|---|
| * Exemple de référence | | | | | |

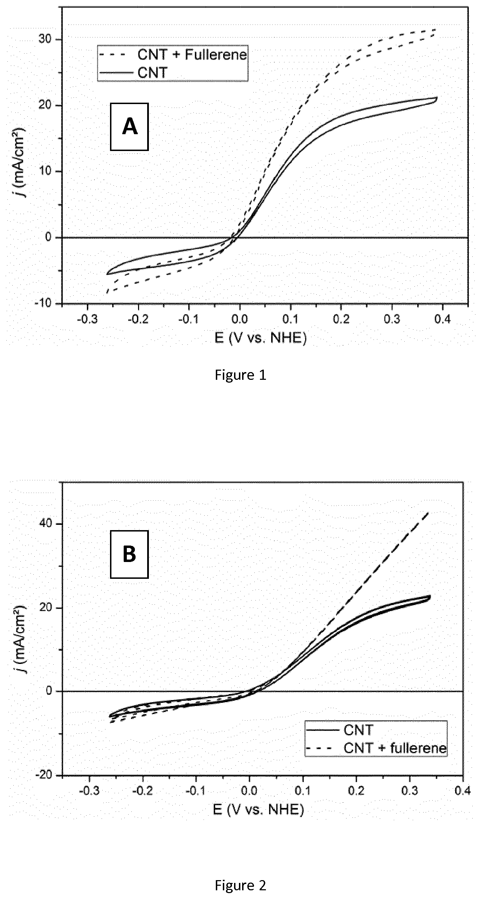

Dans les exemples A et B, l'ajout de fullerène permet l'augmentation des densités de courant en oxydation de H₂ (Figures 1 et 2). Toutefois, il existe toujours un palier diffusif dans l'exemple A qui est levé dans l'exemple B. Il semble qu'uniquement en présence de Nafion qui permet la diffusion des produits (H⁺) et de fullerène une catalyse non limitée par les substrats est possible. Ces résultats montrent donc que le fullerène sert de conducteur de gaz et améliore ainsi la diffusion de l'hydrogène (H₂).

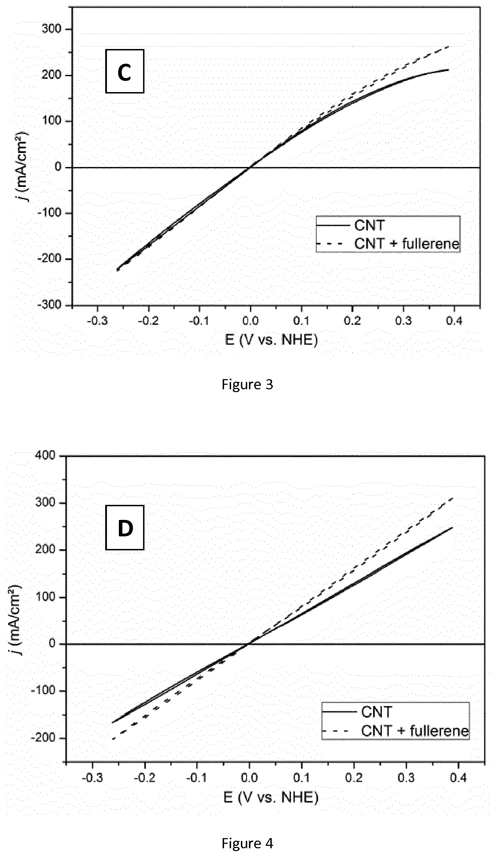

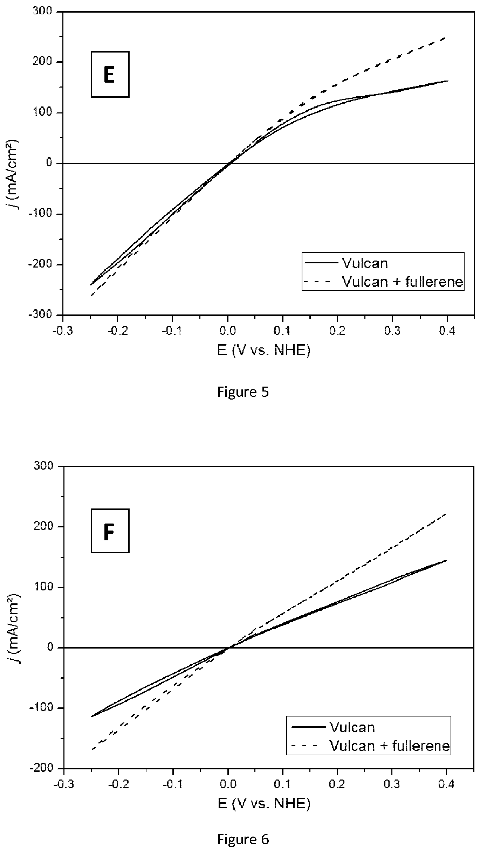

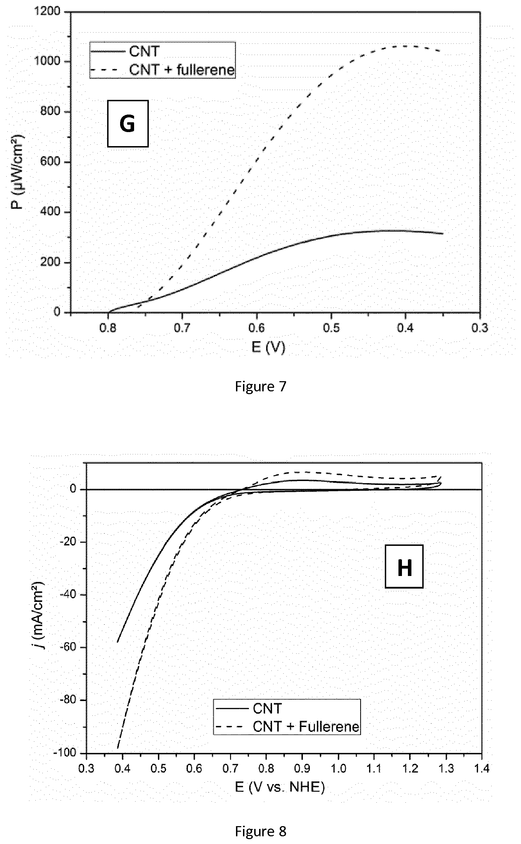

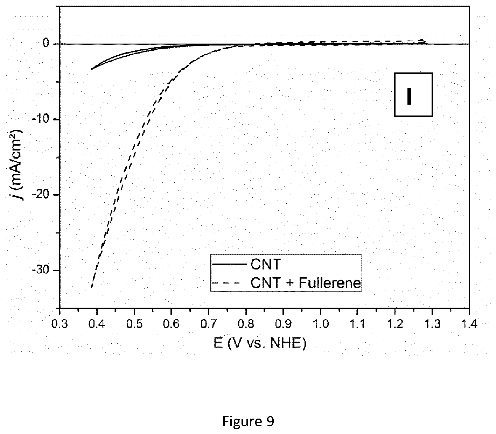

Les exemples C, D, E et F (Figures 3, 4, 5, 6) amènent une lecture très similaire mais pour un catalyseur de Pt avec différents supports carbonés. Les exemples H et I (Figures 8, 9) montrent un effet positif de l'ajout de fullerène sur la réduction de l'oxygène à des cathodes de Pt et Co-N-C respectivement. Ici aussi, le fullerène sert de conducteur de gaz et améliore ainsi la diffusion de l'oxygène (O₂).

L'exemple G (Figure 7) quant à lui montre l'effet de l'ajout de fullerène à l'anode d'une pile à combustible avec une cathode constituée de Co-N-C. La puissance est multipliée par 5.

Les résultats présentés montrent que le fullerène est un additif polyvalent vis-à-vis de différents catalyseurs et substrats. Il est efficace pour de nombreux systèmes, incluant les anodes et cathodes à platine à très faible teneur en platine.

Toutes les électrodes présentées présentent de meilleures densités de courant avec l'additif que sans.

## Revendications

1. Utilisation de fullerène comme additif de couche catalytique d'électrode de pile à combustible pour améliorer la diffusion de gaz, ladite couche catalytique comprenant un catalyseur comprenant un métal non noble et un support poreux conducteur et ayant une teneur en fullerène de 0,5 à 60% en poids sec par rapport au poids sec total de la couche catalytique.

2. Couche catalytique d'électrode de pile à combustible comprenant un matériau catalytique, un additif conducteur de gaz et un support poreux conducteur, dans laquelle l'additif conducteur de gaz est un fullerène et ledit matériau catalytique est catalyseur comprenant un métal non noble, ladite couche ayant une teneur en fullerène de 0,5 à 60% en poids sec par rapport au poids sec total de la couche catalytique.

3. Couche catalytique selon la revendication 2, dans laquelle le support poreux conducteur est choisi parmi les allotropes du carbone, les oxydes métalliques conducteurs et le carbure de tungstène.

4. Couche catalytique selon l'une quelconque des revendications 2 à 3, ayant une teneur en matériau catalytique de 0,0001 à 99,5 % en poids sec par rapport au poids sec total de la couche catalytique.

5. Couche catalytique selon la revendication 4, ayant une teneur en matériau catalytique de 0,0001 à 50 % en poids sec par rapport au poids sec total de la couche catalytique.

6. Couche catalytique selon la revendication 4, ayant une teneur en matériau catalytique de 5 à 99,5 % en poids sec par rapport au poids sec total de la couche catalytique.

7. Encre catalytique comprenant un solvant, un matériau catalytique, un additif conducteur de gaz et un support poreux conducteur, l'additif conducteur de gaz étant un fullerène et ledit matériau catalytique est un catalyseur comprenant un métal non noble, ladite encre ayant une teneur en fullerène de 0,5 à 60% en poids sec par rapport au poids sec total de l'encre catalytique.

8. Encre catalytique selon la revendication 7, dans laquelle le support poreux conducteur est choisi parmi les allotropes du carbone, les oxydes métalliques conducteurs et le carbure de tungstène.

9. Encre catalytique selon l'une quelconque des revendications 7 à 8, ayant une teneur en matériau catalytique de 0,0001 à 99,5 % en poids sec par rapport au poids sec total de l'encre catalytique.

10. Encre catalytique selon la revendication 9, ayant une teneur en matériau catalytique de 0,0001 à 50 % en poids sec par rapport au poids sec total de l'encre catalytique et comprenant un support poreux conducteur.

11. Encre catalytique selon la revendication 9, ayant une teneur en matériau catalytique de 5 à 99,5 % en poids sec par rapport au poids sec total de l'encre catalytique.

12. Electrode de pile à combustible comprenant une couche de diffusion gazeuse et, sur au moins une partie de la surface de la couche de diffusion gazeuse, une couche catalytique selon l'une quelconque des revendications 2 à 6.

## Patentansprüche

1. Verwendung von Fulleren als Zusatz einer katalytischen Schicht einer Brennstoffzellenelektrode zur Verbesserung der Gasdiffusion, wobei die katalytische Schicht einen Katalysator umfasst, der ein Nichtedelmetall und einen leitfähigen porösen Träger umfasst und einen Fullerengehalt von 0,5 bis 60 % Trockengewicht, bezogen auf das Gesamttrockengewicht der katalytischen Schicht, aufweist.

2. Katalytische Schicht einer Brennstoffzellenelektrode, die ein katalytisches Material, einen gasleitenden Zusatz und einen leitfähigen porösen Träger umfasst, wobei der gasleitende Zusatz ein Fulleren ist und das katalytische Material ein Katalysator ist, der ein Nichtedelmetall umfasst, wobei die Schicht einen Fullerengehalt von 0,5 bis 60 % Trockengewicht, bezogen auf das Gesamttrockengewicht der katalytischen Schicht, aufweist.

3. Katalytische Schicht nach Anspruch 2, wobei der leitfähige poröse Träger aus Kohlenstoffallotropen, leitfähigen Metalloxiden und Wolframcarbid gewählt ist.

4. Katalytische Schicht nach einem der Ansprüche 2 bis 3, mit einem Gehalt an katalytischem Material von 0,0001 bis 99,5 % Trockengewicht, bezogen auf das Gesamttrockengewicht der katalytischen Schicht.

5. Katalytische Schicht nach Anspruch 4 mit einem Gehalt an katalytischem Material von 0,0001 bis 50 % Trockengewicht, bezogen auf das Gesamttrockengewicht der katalytischen Schicht.

6. Katalytische Schicht nach Anspruch 4 mit einem Gehalt an katalytischem Material von 5 bis 99,5 % Trockengewicht, bezogen auf das Gesamttrockengewicht der katalytischen Schicht.

7. Katalytische Tinte, die ein Lösungsmittel, ein katalytisches Material, einen gasleitenden Zusatz und einen leitfähigen porösen Träger umfasst, wobei der gasleitende Zusatz ein Fulleren ist und das katalytische Material ein Katalysator ist, der ein Nichtedelmetall umfasst, wobei die Tinte einen Fullerengehalt von 0,5 bis 60 % Trockengewicht, bezogen auf das Gesamttrockengewicht der katalytischen Tinte, aufweist.

8. Katalytische Tinte nach Anspruch 7, wobei der leitfähige poröse Träger aus Kohlenstoffallotropen, leitfähigen Metalloxiden und Wolframcarbid gewählt ist.

9. Katalytische Tinte nach einem der Ansprüche 7 bis 8, mit einem Gehalt an katalytischem Material von 0,0001 bis 99,5 % Trockengewicht, bezogen auf das Gesamttrockengewicht der katalytischen Tinte.

10. Katalytische Tinte nach Anspruch 9 mit einem Gehalt an katalytischem Material von 0,0001 bis 50 % Trockengewicht, bezogen auf das Gesamttrockengewicht der katalytischen Tinte, und mit einem leitfähigen porösen Träger.

11. Katalytische Tinte nach Anspruch 9 mit einem Gehalt an katalytischem Material von 5 bis 99,5 % Trockengewicht, bezogen auf das Gesamttrockengewicht der katalytischen Tinte.

12. Brennstoffzellenelektrode mit einer Gasdiffusionsschicht und, auf wenigstens einem Teil der Oberfläche der Gasdiffusionsschicht, einer katalytischen Schicht nach einem der Ansprüche 2 bis 6.

## Claims

1. A use of fullerene as a fuel cell electrode catalytic layer additive to improve gas diffusion, said catalytic layer comprising a catalyst comprising a non-noble metal and a conductive porous support and having a fullerene content of 0.5 to 60% by dry weight relative to the total dry weight of the catalytic layer.

2. The fuel cell electrode catalytic layer comprising a catalytic material, a gas-conducting additive and a conductive porous support, wherein the gas-conducting additive is a fullerene and said catalytic material is a catalyst comprising a non-noble metal, said layer having a fullerene content of 0.5 to 60% by dry weight relative to the total dry weight of the catalytic layer.

3. The catalytic layer according to claim 2, wherein the conductive porous support is selected from carbon allotropes, conductive metal oxides and tungsten carbide.

4. The catalytic layer according to any one of claims 2 to 3, having a catalytic material content of 0.0001 to 99.5% by dry weight relative to the total dry weight of the catalytic layer.

5. The catalytic layer according to claim 4, having a catalytic material content of 0.0001 to 50% by dry weight relative to the total dry weight of the catalytic layer.

6. The catalytic layer according to claim 4, having a catalytic material content of 5 to 99.5% by dry weight relative to the total dry weight of the catalytic layer.

7. A catalytic ink comprising a solvent, a catalytic material, a gas-conducting additive and a conductive porous support, the gas-conducting additive being a fullerene and said catalytic material is a catalyst comprising a non-noble metal, said ink having a fullerene content from 0.5 to 60% by dry weight relative to the total dry weight of the catalytic ink.

8. The catalytic ink according to claim 7, wherein the porous conductive support is selected from carbon allotropes, conductive metal oxides and tungsten carbide.

9. The catalytic ink according to any one of claims 7 to 8, having a catalytic material content of 0.0001 to 99.5% by dry weight relative to the total dry weight of the catalytic ink.

10. The catalytic ink according to claim 9, having a catalytic material content of 0.0001 to 50% by dry weight relative to the total dry weight of the catalytic ink and comprising a conductive porous support.

11. The catalytic ink according to claim 9, having a catalytic material content of 5 to 99.5% by dry weight relative to the total dry weight of the catalytic ink.

12. A fuel cell electrode comprising a gas diffusion layer and, on at least part of the surface of the gas diffusion layer, a catalytic layer according to any one of claims 2 to 6.
